Europäisches Patentamt

European Patent Office

Office européen des brevets

(11) Publication number: 0 300 731
A1

## (12) EUROPEAN PATENT APPLICATION

(21) Application number: 88306593.0

(22) Date of filing: 19.07.88

(51) Int. Cl.⁴: **G08C 23/00** , **H04B 11/00**

(30) Priority: 22.07.87 JP 184137/87

(43) Date of publication of application:
**25.01.89 Bulletin 89/04**

(84) Designated Contracting States:
**AT BE CH DE ES FR GB GR IT LI LU NL SE**

(71) Applicant: **INAX CORPORATION**
**6 Koiehonmachi 3-chome**
**Tokoname-Shi Aichi(JP)**

(72) Inventor: **Hattori Mitsutaka,**
**c/o Enokido Factory, Inax Corporation,**
**3-77 Minato-Cho, Tokoname-Shi, Aichi(JP)**
Inventor: **Kawamoto Ryuichi,**
**c/o Enokido Factory, Inax Corporation**
**3-77 Minato-Cho, Tokoname-Shi, Aichi(JP)**

(74) Representative: **Jenkins, Peter David et al**
**Page White & Farrer 5 Plough Place New**
**Fetter Lane**
**London EC4A 1HY(GB)**

(54) **Equipment for communication or control.**

(57) Ultrasonic wave transmitting/receiving system making use of a pipe (11), in which ultrasonic transmitting/receiving devices (12, 13) are provided both in a first chamber and in a second chamber which are associated with the pipe serving as a water pipe leading to these chambers in a building structure, and the pipe or a fluid therein serves as a propagation medium for ultrasonic waves.

**FIG.1**

EP 0 300 731 A1

## EQUIPMENT FOR COMMUNICATION OR CONTROL

The present invention relates to an equipment for providing communications between one chamber and the other chamber and controlling appliances, wherein a pipe arranged in a building structure or a fluid flowing therethrough serves as a propagation medium for ultrasonic waves.

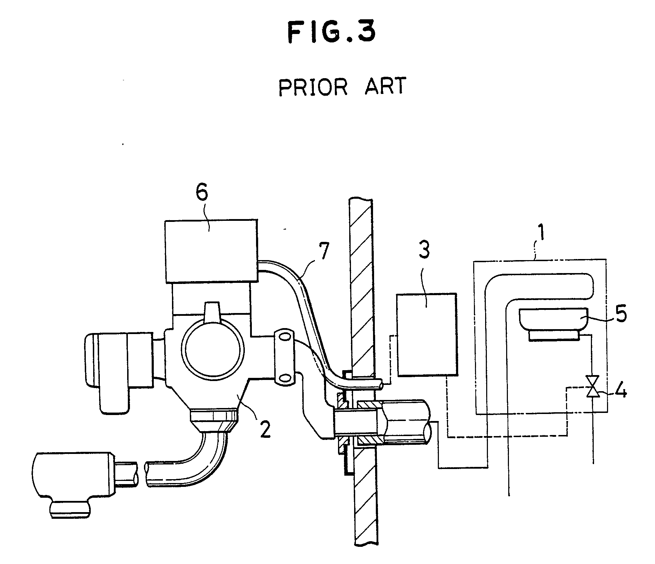

In recent years, there has been increased use of a hot water supplying system in which the hot water is, as illustrated in FIG. 3, supplied from a hot water supplying appliance 1 installed in one chamber to a mixing valve 2 provided in the other chamber. This type of conventional hot water supplying system is arranged in the following manner. An opening degree of a proportional control valve 4 of the hot water supplying appliance 1 is adjusted by operating a main control unit 3. A temperature of hot water heated by the hot water supplying appliance 1 by adjusting an amount of gas fed to a burner 5. A remote control unit 6 mounted on the upper surface of the mixing valve 2 is connected through a cord 7 to the main control unit 3 provided on the side of the hot water supplying appliance 1, whereby a temperature of original hot water is freely controlled on the side of the mixing valve 2. Thus, the temperature of hot water discharged from the mixing valve 2 is quickly adjusted.

In the prior art hot water supplying system described above, however, the remote control unit 6 of the mixing valve 2 has to be connected to the main control unit 3 of the hot water supplying appliance 1 by using the cord 7, which arrangement invovles electric wiring works. Besides, in such electric wiring works the standardized cord 7 of a predetermined length is in general employed. It is therefore required to consider a dimension equivalent to a distance between the main control unit 3 and the remote control unit 6. The main control unit 3 of the hot water supplying appliance 1 is a 100V power source, while the remote control unit 6 is a low voltage power source of 12V or 24V. Therefore, the practicability is not obtained unless a voltage exchange is effected therebetween. In the case of additionally installing devices for dealing with the mixing valve 2 and other hot water with respect to a single piece of hot water supplying appliance 1, the number of wires leading to the main control unit 3 increases. Consequently, there arises a defect of additionally providing such devices.

According to one aspect of the invention, there is provided an equipment for communication or control in which ultrasonic wave transmitting/receiving devices are installed both in a first chamber and in a second chamber in connection with a pipe serving as a water pipe leading to the respective chambers which are in a building structure, and the pipe or the fluid flowing therethrough serves as the propagation medium for the ultrasonic waves.

According to another aspect of the invention, there is provided an equipment for communication or control in which a signal is transmitted from a certain spot to a different spot, comprising: a pipe arranged to permit the fluid to flow therealong inside the pipe; an ultrasonic wave transmitting device provided in the pipe in the vicinity of the spot from which the signal is transmitted; and another ultrasonic wave receiving device provided in the pipe in the vicinity of the spot to which the signal is transmitted, whereby the signal to be transmitted is, as an ultrasonic wave, propagated along the pipe or through the fluid in the pipe.

According to still another aspect of the invention, there is provided a hot water supplying system provided with control units, comprising: a mixing valve installed in one chamber; a hot water supplying appliance installed in the other chamber; a pipe arranged to feed the hot water from the hot water supplying appliance to the mixing valve; ultrasonic wave transmitting/receiving devices disposed both on the side of the mixing valve of the pipe and on the side of the hot water supplying appliance; a control unit disposed in close proximity to the mixing valve; and a main control unit diposed in close proximity to the hot water supplying appliance, whereby an operation signal is inputted via the untrasonic transmitting/receiving devices to the control unit, with the pipe or the fluid therein serving as a propagation medium, and the hot water supplying appliance is thus operated.

When the ultrasonic waves are oscillated from the ultrasonic wave transmitting/receiving device provided in one chamber, the ultrasonic waves are propagated through the pipe and the fluid existing therein and are received by another ultrasonic wave transmitting/receiving device provided in the other chamber. Hence, the transmission and receipt of the signal can be effected between these ultrasonic wave transmitting/receiving devices without using any cord, thereby making it possible to control the appliance placed in one chamber from the other chamber. In addition, the ultrasonic wave transmitting/receiving devices are capable of only communicating with each other. Where a plurality of appliances can be used in association with a single piece of appliance, the single appliance can correspond to the plurality of associated appliances by employing a single piece of ultrasonic wave transmitting/receiving device, thereby facilitating the works for more installation.

Embodiments of the present invention will now be described by way of example only with reference to the accompanying drawings in which:-

FIG. 1 is a block diagram showing one embodiment of the present invention;

FIG. 2 is a block diagram illustrating an entire hot water supplying system according to the present invention;

FIG. 3 is a block diagram depicting a conventional hot water supplying system as a whole ; and

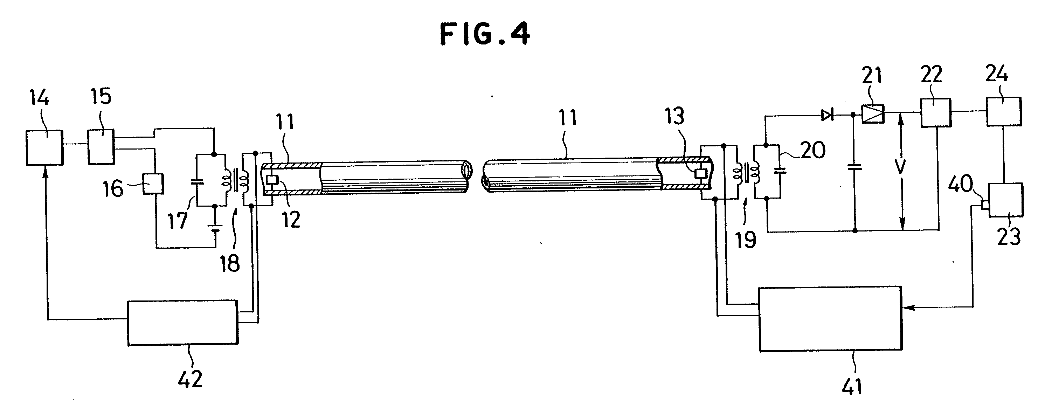

FIG. 4 is a block diagram showing another embodiment of the present invention.

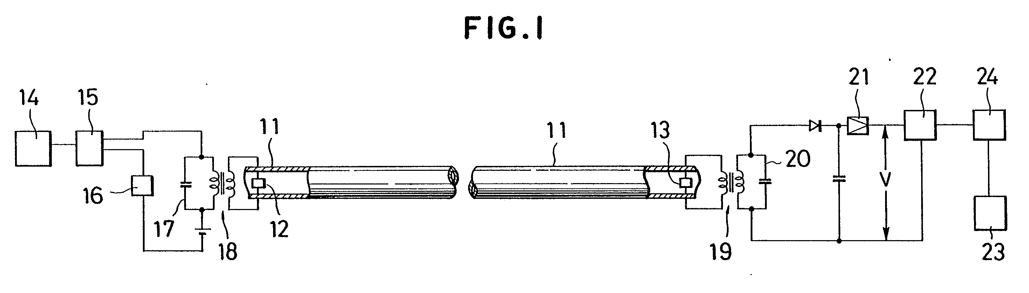

Turning attention to FIG. 1, there is illustrated a block diagram of one embodiment of the present invention. Ultrasonic wave transmitting/receiving devices 12 and 13 are places in predetermined positions in a pipe 11 like a water pipe. An operation signal transmitted from a control unit 14 is converted into a digital signal by means of a signal control device 15 and is then inputted through an amplifier 16 to an oscillation circuit 16 which makes use of, e.g., an LC (an inductor and a capacitor). This oscillation circuit 17 impresses a voltage through a transformer 18 on the ultrasonic wave transmitting/receiving device 12 in response to the digital signal, with the result that the ultrasonic wave transmitting/receiving device 12 intermittently oscillates the ultrasonic waves in response to the digital signals. The ultrasonic waves are propagated along the pipe 11 or through a fluid in the pipe 11 and are received by another ultrasonic wave transmitting/receiving device 13 provided on the other side. The ultrasonic wave signal is converted into an electric signal by means of a signal receiving circuit 20 through a transformer 19. Subsequently, the thus converted electric signal is amplified by an amplifier 21. The amplified electric signal is decrypted by a signal decryption circuit 22 and is then inputted to a main control unit 24 for controlling a predetermined appliance 23. It is consequently possible to freely control the appliance 23 from a remote position.

In a control system associated with another mode of the present invention, the appliance 23 is provided with a sensor 40 for detecting an operational condition thereof. A signal of this sensor 40 is inputted via a circuit 41 incorporating the signal control device, the amplifier, the oscillation circuit and the transformer (all these components are not illustrated) to the ultrasonic transmitting/receiving device 13. Connected to the ultrasonic wave transmitting/receiving device 12 is a circuit incorporating the transformer, the signal receiving circuit, the amplifier and the signal decryption circuit (all these components are also not illustrated). The circuit 42 outputs a signal to the control unit 14. The ultrasonic wave transmitting/receiving devices 12 and 13 are so changed over that when any one of them is effecting the transmission, the other is brought into the receiving state. Upon actuation of the control unit 14, the appliance 23 is, as in the mode shown in FIG. 1, operated. The sensor 40 serves to detect an operational condition of the appliance 23. A detection signal thereof is inputted via the circuit 41, the ultrasonic wave transmitting/receiving devices 12 and 13 and the circuit 42 to the control unit 14. Hence, the control unit 14 is able to feedback-control the appliance 23.

As discussed above, in accordance with the present invention, the pipe 11 like a water pipe or a hot water supplying pipe or the fluid flowing therethrough serves as a propagation medium for the ultra sonic waves. The ultrasonic wave transmitting/receiving devices 12 and 13 disposed on both sides of the pipe 11 transmit or receive the signal. Because of this arrangement, the cord may be completely eliminated. In connection with the transmission and receipt of the signal, other information can also be transmitted or received, except for the step of controlling the appliance 23. For instance, separate chambers in the building are each equipped with interphones; and a vocal signal can be transmitted through the water pipe extending from one chamber to another chamber.

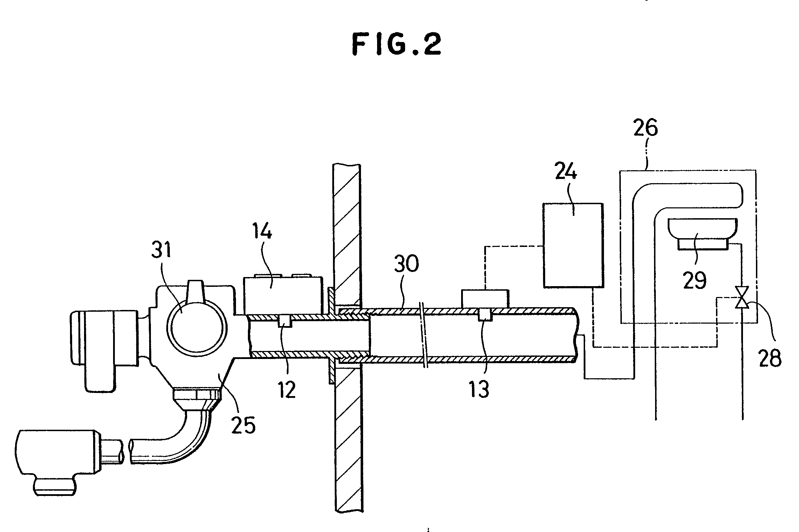

FIG. 2 is a block diagram depicting a general construction of an embodiment in which the presnet invention is applied to a system for supplying the hot water from a hot water supplying appliance 26 to a mixing valve 25 which are both placed in remote positions. As depicted in FIG. 2, the mixing valve 25 and the hot water supplying appliance 26 are provided in separate chambers. The mixing valve 25 exposed to one chamber incorporates the ultrasonic wave transmitting/receiving device 12. Mounted on the side of an upper surface of the mixing valve 25 is a control unit 14 for the untrasonic wave transmitting/receiving device 12. The hot water supplying appliance 26 installed in the other chamber is arranged such that an opening degree of a proportional control valve 28 is controlled by a main control unit 24 in order to adjust an amount of gas fed to a burner 29. A temperature of the hot water heated by the hot water supplying appliance 26 is thus adjusted. The mixing valve 25 is connected through a hot water supplying pipe 30 to the hot water supplying appliance 26. The ultrasonic wave transmitting/receiving device 13 is provided in a portion of the hot water supplying pipe 30 on the side of the hot water supplying appliance 26. The signal received by the ultrasonic wave transmitting/receiving device 13 is inputted to the main control unit 24 for the hot water supplying appliance 26. In this embodiment of FIG. 2, the illustration of electric circuits for the ultrasonic wave transmitting/receiving deivces 12 and 13 is omitted herein. As a matter of course, a water supplying tube (not shown) is connected to the primary side of the mixing valve 25, while the other side thereof is connected to the hot water suppying pipe 30. A temperature adjusting handle 31 and a flow-rate adjusting handle (not illustrated) are sparately attached to the mixing valve 25; or alternatively the single handle is provided for perfoming the adjustment.

When feeding the hot water of a predetermined temperature from the mixing valve 25, the operation begins with manipulating an ON switch (not illustrated) of the control unit 14 mounted on the side of the upper surface of the mixing valve 25, and the ultrasonic wave of a predetermined signal is oscillated from the ultrasonic wave transmitting/receiving device 12. The thus oscillated ultrasonic waves are propagated through the pipe 30 and the hot water existing therein and are received by the ultrasonic wave transmitting/receiving device 13 provided on the side of the hot water supplying appliance 26. The ultrasonic waves received by the ultrasonic wave transmitting/receiving device 13 are converted into electric signals and inputted to the main control unit 24 after being decrypted. For this reason, the main control unit 24 behaves to open the proportional control valve 28 till reaching a preset degree of opening, thus adjusting an amount of gas fed to the burner 29 to a preset value. As a result, the temperature of hot water heated by the hot water supplying appliance 26 is adjusted to a desired value, and the hot water is supplied via the hot water supplying pipe 30 to the mixing valve 25. The mixing valve 25 functions to discharge the hot water having a predetermined temperature by mixing the thermally adjusted hot water with the water fed from an unillustrated water supplying tube. In this manner, the original hot water (supplied from the hot water supplying appliance 26) is thermally adjusted, whereby the temperature of the hot water discharged from the mixing valve 25 can quickly be adjusted to a desired value.

In the case of changing the temperature of the original hot water from a state where the hot water of the desired temperature is being discharged, a temperature increment switch (not illustrated) of the control unit 14 disposed on the side of the mixing valve 25 is operated, and, as in the previous case, the ultrasonic wave of the preset signal is oscillated from the ultrasonic wave transmitting/receiving device 12. This ultrasonic wave is received by the ultrasonic wave transmitting/receiving device 13 provided on the side of the hot water supplying appliance 26, thereby effecting the signal decryption. Subsequently, the signal is outputted to the main control unit 24. In turn, the main control unit 24 controls, as in the preceding case, the proportional control valve 28 in order to adjust the amount of gas supplied to the burner 29. Thus, the temperature of hot water fed from the hot water supplying appliance 26 to the mixing valve 25 is varied. The adjustment of temperature is similarly made when ajusting the temperature of the original hot water to lower values.

When the supply of hot water from the hot water supplying appliance 26 to the mixing valve 25 is halted, the transmission and receipt of the ultrasonic wave signals are effected in the above-mentioned manner between the ultrasonic wave transmitting/receiving devices 12 and 13 by manipulating an OFF switch (not shown) of the control unti 14. Then, an OFF signal is outputted to the main control unit 24, and the proportional control valve 28 is thereby closed.

As explained earlier, the hot water supplying appliance 26 installed in one chamber can be controlled from the other chamber with no use of any distributing cord. On the occasion of requiring more installation of the appliances which deal with other mixing valves and the hot water with respect to the single hot water supplying appliance 26, it may be sufficient to make the pipe 30 branch off, and the signal receiving unit on the side of the hot water supplying appliance 26 can be used in cooperation with the ultrasonic transmitting/receiving device 13.

The present invention is not confined to the embodiments discussed above, but adequate modifications may be effected therein. The appliances installed in the respective chambers may involve the use of, e.g., a ventilating fan, a human body detecting sensor or the like, excepting the mixing valve 25 and the hot water supplying appliance 26. The ventilating fan may be ON/OFF-controlled disposed in one chamber from the other chamber. An arrangement relative to the human body detecting sensor is such that: the control unit provided in one chamber is equipped with a monitor or a display lamp, while the other chamber is provided with the human body detecting sensor; the transmission of signals is performed between the ultrasonic wave transmitting/receiving devices; and the human body detecting sensor is ON/OFF-controlled. An additional arrangement is such that: a ultrasonic wave signal for giving information on the presence or non-presence of a human body is transmitted from the ultrasonic wave transmitting/receiving device on the side of the human body detecting sensor to another ultrasonic wave transmitting/receiving device on the side of the monitor or the display lamp. The monitor or the display lump indicates the presence or non-presence of the human body. Futhermore, the communication is also practicable only by exchanging other kinds information between the ultrasonic wave transmitting/receiving devices.

The preferred embodiments of the present invention can provide an equipment for communication or control in which a pipe or a fluid flowing therethrough serves as a propagation medium for ultrasonic waves, and any connecting cord is not required.

Although the illustrative embodiments of the present invention have been described in greater detail with reference to the accompanying drawings, it is to be understood that the invention is not limited to those precise embodiments. Various changes or modifications may be effected therein by one skilled in the art without departing from the scope or the spirit of the invention

## Claims

(1). An equipment for communication or control in which a signal is transmitted from a certain spot to a different spot, comprising:

a pipe arranged to permit a fluid to flow therealong inside the pipe;

a ultrasonic wave transmitting/receiving device provided in said pipe in the vicinity of said spot from which said signal is transmitted; and

a ultrasonic wave transmitting/receiving device provided in said pipe in the vicinity of said spot to which said signal is transmitted, whereby said signal to be transmitted is, as an ultrasonic wave, propagated along said pipe or through said fluid in said pipe.

(2). An equipment as set forth in Claim 1, further comprising means for inputting said signal to be transmitted as an electric signal to said ultrasonic wave transmitting/receiving device.

(3). An equipment as set forth in Claim 1 or Claim 2, further comprising means for decrypting said signal received by said ultrasonic wave transmitting/receiving device and outputting said signal to an appliance to which said signal is to be transmitted.

(4). An equipment as set forth in any one of Claims 1 to 3, wherein said ultrasonic wave transmitting device and said ultrasonic wave receiving device are both defined as a wave transmitting/receiving device capable of transmitting and receiving a ultrasonic wave.

(5). A hot water supplying system provided with control units, comprising:

a mixing valve installed in one chamber;

a hot water supplying appliance installed in the other chamber;

a pipe arranged to feed the hot water from said hot water supplying appliance to said mixing valve;

ultrasonic wave transmitting/receiving devices disposed both on the side of said mixing valve of said pipe and on the side of said hot water supplying appliance;

a control unit disposed in close proximity to said mixing valve; and

a main control unit disposed in close proximity to said hot water supplying appliance, whereby an operation signal is inputted via said ultrasonic wave transmitting/receiving device to said control unit, with said pipe or said fluid therein serving as a propagation medium, and said hot water supplying appliance is thus operated.

# FIG.I

EP 0 300 731 A1

# FIG.2

EP 0 300 731 A1

# FIG.3

## PRIOR ART

# FIG.4

EP 0 300 731 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-2 938 734 (SIEMENS)<br>* Whole document *<br>----- | 1-5 | G 08 C 23/00<br>H 04 B 11/00 |
| | | | **TECHNICAL FIELDS SEARCHED (Int. Cl.4)**<br><br>G 08 C |

The present search report has been drawn up for all claims

| Place of search | Date of completion of the search | Examiner |
|---|---|---|
| THE HAGUE | 28-10-1988 | WANZEELE R.J. |

EPO FORM 1503 03.82 (P0401)